**Europäisches Patentamt**

**European Patent Office**

**Office européen des brevets**

(19)

(11) Veröffentlichungsnummer: **0 151 484**
**A2**

(12) # EUROPÄISCHE PATENTANMELDUNG

(21) Anmeldenummer: **85101184.1**

(22) Anmeldetag: **05.02.85**

(51) Int. Cl.⁴: **B 62 B 15/00**

(30) Priorität: 06.02.84 DE 8403410 U

(43) Veröffentlichungstag der Anmeldung:
14.08.85 Patentblatt 85/33

(84) Benannte Vertragsstaaten:
AT BE CH DE FR GB IT LI LU NL SE

(71) Anmelder: **Basel, Heinz**
**Johann-Clanze-Strasse 49**
**D-8000 München 70(DE)**

(72) Erfinder: **Basel, Heinz**
**Johann-Clanze-Strasse 49**
**D-8000 München 70(DE)**

(74) Vertreter: **Hansmann, Axel et al,**
**Patentanwälte HANSMANN & VOGESER**
**Albert-Rosshaupter-Strasse 65**
**D-8000 München 70(DE)**

(54) **Rettungs- und Sportschlitten für Wintersportler mit Luftmatratze.**

(57) Rettungs- und Sportschlitten für Wintersportler mit einer als Transportfläche aufblasbaren Luftmatratze, an deren beiden Längsseiten Skier anbringbar sind und an deren vorderem Ende Stangen zum Lenken und Handhaben des Schlittens vorgesehen sind.

Croydon Printing Company Ltd.

BESCHREIBUNG:


"Rettungs- und Sportschlitten für Wintersportler mit Luftmatratze"

Die Erfindung bezieht sich auf einen Rettungs- und Sportschlitten gemäß dem Oberbegriff des Anspruchs 1.

Rettungs- und Sportschlitten dieser Art sind seit vielen Jahren bekannt, haben sich aber bisher nicht allgemein durchsetzen können. Ein Beispiel eines derartigen Rettungs- und Sportschlittens zeigt das DE-GM 1 921 351 aus dem Jahre 1965. Dieser bekannte Schlitten besteht aus einem starren horizontalen, durch zwei Leitholme verlängerten Rahmen und einer an diesem befestigten Luftmatratze. Der Rahmen hat vorwärtige Winkel, wobei die Vorrichtungen, mittels welcher die Leitholme an dessen vorderen Teil befestigt sind, durch Eckbleche versteift sind. Die beiden längsgerichteten Seitenteile der Matratze werden von zwei an dem Metallrahmen befestigten Skiern getragen.

Ein derartiger Rettungs- und Sportschlitten mag aufgrund des vorgesehenen Rahmens, der Leitholme und der verstärkenden Eckbleche vergleichsweise große Stabilität für häufigen Gebrauch aufweisen. Er ist jedoch schwer und umfangreich, und es bedarf erheblicher Transportkapazität, um einen solchen Schlitten mit sich zu führen.

Der vorliegenden Erfindung liegt die Aufgabe zugrunde, einen Rettungs- und Sportschlitten der in Rede stehenden Gattung so zu gestalten, daß er von Skifahrern ohne großen Platzverbrauch auf einfache Weise ständig mitgeführt werden kann, wobei auch sperrige, getrennte Rahmenteile und dgl. erübrigt sein sollen.

Der Anspruch 1 kennzeichnet, die Lösung der gestellten Aufgabe. Gemäß der vorliegenden Erfindung dienen als Versteifung der Luftmatratze allein die Skier und als Stangen zum Lenken allein die Skistöcke. Da sperrige Rahmenteile entfallen, wird es ermöglicht, den Schlitten nach Art einer Skiläufer-Gurttasche auszugestalten und mit sich zu führen.

Wenn gemäß Anspruch 2 zusätzlich zu den Luftmatratzenwülsten eine durchgehende gleitfähige Unterlage vorgesehen ist, ermöglicht das eine vergleichsweise leichte Ausführung der Luftmatratze, ohne daß Beschädigungsgefahr an der Gleitfläche besteht.

Anspruch 3 kennzeichnet eine vorteilhafte Ausgestaltungsmöglichkeit der Reißverschlußtasche.

Anspruch 4 kennzeichnet im einzelnen die Anordnung von Einstecktaschen für die vorderen und hinteren Skienden sowie die Verteilung der Aufblaswülste. Die sinnvolle Verwendung von in Längsrichtung verlaufenden Aufblaswülsten und von in Querrichtung verlaufenden Aufblaswülsten gibt dem Schlitten auch ohne Anordnung getrennter Rahmenteile eine große Stabilität.

Anspruch 5 kennzeichnet eine Ausgestaltung der Querwülste zur Anpassung an verschiedene Skilängen. Anspruch 10 kennzeichnet eine besonders vorteilhafte Anordnung der in Längsrichtung verlaufenden Wülste, welche die Anwendbarkeit des Gerätes auch als Sitz mit aufgeklappter Rückenlehne ermöglicht. Die weiteren Unteransprüche kennzeichnen vorteilhafte Ausgestaltungen und Weiterbildungen.

Es folgt die Beschreibung eines Ausführungsbeispiels anhand von Zeichnungen.

3

0151484

FIGURENAUFSTELLUNG:

Fig. 1 zeigt eine Draufsicht auf einen Rettungs- und
Sportschlitten in Gestalt einer aufblasbaren
Luftmatratze mit an den Seiten zur Versteifung
angebrachten Skiern.

Fig. 2 zeigt eine Seitenansicht des Rettungs- und
Sportschlittens mit am vorderen Ende zum Lenken
und Handhaben angebrachtem Skistock.

Fig. 3 zeigt den Rettungs- und Sportschlitten in zusammengefaltetem Zustand in Form einer Skiläufer-
Gurttasche.

Fig. 4 zeigt den Rettungs- und Sportschlitten einer
als Sitz umfunktionierten Liege.

Der in den Figuren gezeigte Rettungs- und Sportschlitten
für Wintersportler besteht aus einer als Transportfläche
aufblasbaren Luftmatraze 1. Die Luftmatratze hat mehrere
parallel zueinander angeordnete aufblasbare Luftmatratzenwülste 3, 5 und 7 mit Aufblasventilen 9. Beim gezeigten
Ausführungsbeispiel sind einzeln aufblasbare Wülste vorgesehen, wobei sich zwischen den im vorderen Teil des
Schlittens in Längsrichtung verlaufenden Wülsten 3 und 5
eine Trennlinie 11 befindet, welche ein Knicken der Luftmatratze längs dieser Trennlinie 11 gestattet. Nach Bedarf können die Wülste 3 und 5 aber auch einheitlich
durchgehend ausgestaltet sein, oder es kann auch die
gesamte Luftmatratze eine einheitlich aufblasbare Kammer
aufweisen.

Unterhalb der Luftmatratze befindet sich eine robuste,
gleitfähige Unterlage 13 mit darunter angebrachten

Führungskufen 15, 17 aus flexiblem Material.

Die im vorderen Teil der Luftmatratze vorgesehenen Aufblaswülste 3 und 5 lassen an den Seiten Streifen frei, welche die Breite von Skiern 19, 21 haben. Auf den beiden Enden der Luftmatratze sind am vorderen Ende Einstecktaschen 23, 25 zum Einstecken der Skispitzen vorgesehen. Im hinteren Bereich des Schlittens sind entsprechende Taschen 27, 29 zum Einstecken der Ski - enden vorgesehen.

Die im hinteren Teil des Schlittens in Querlage vorgesehenen Aufblaswülste 7 überdecken die hinteren Einstecktaschen 27 und 29. Zwischen den in Querrichtung verlaufenden Aufblaswülsten 7 erstrecken sich Zwischenstreifen 31, welche ein Umklappen des hinteren Teils der Luftmatratze um die hinteren Enden der Skier nach vorne gestatten. Mittels der Befestigungsbänder 33 und 35 kann dann der nach vorne umgeklappte Teil der Luftmatratze durch Befestigung der Bänder 33 und 35 an den Skibindungen 37 und 39 in seiner Lage gesichert werden. Die Skier werden auf diese Weise sicher in den vorderen und hinteren Einstecktaschen 23-29 gehalten und geben dem Schlitten die erforderliche Stabilität.

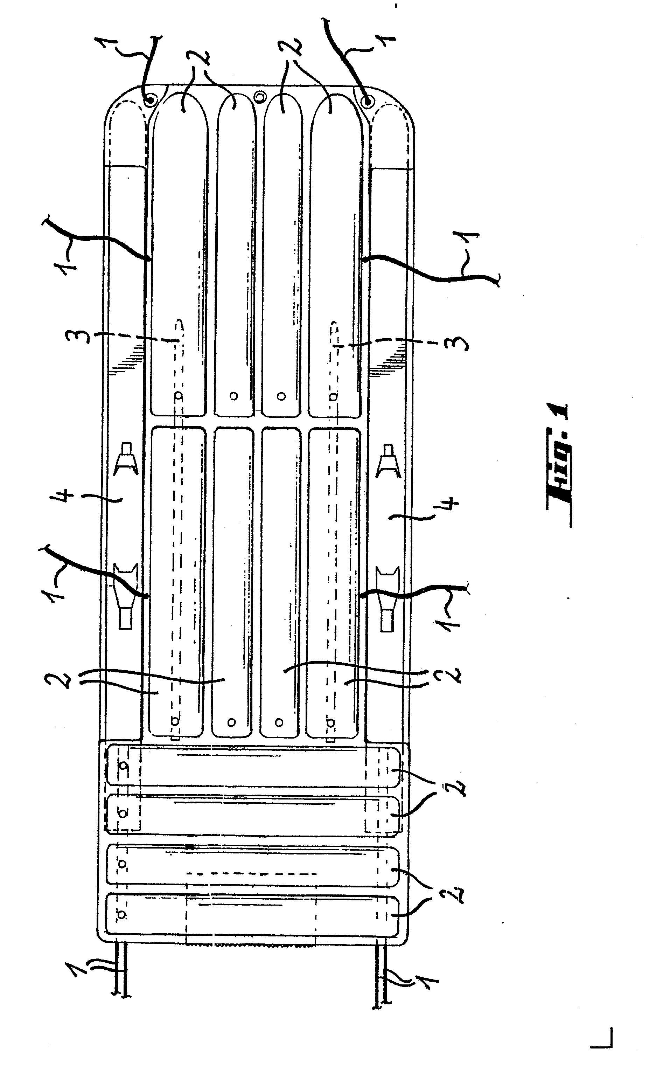

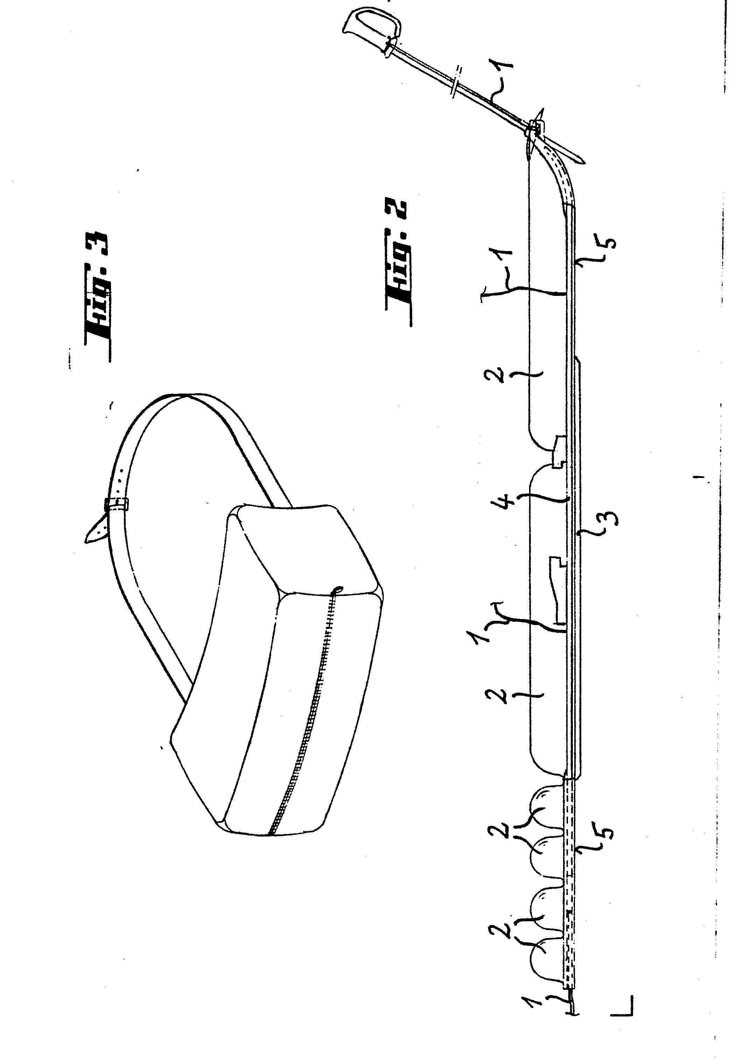

An der Vorderseite des Schlittens sind EinstecKösen 41, 43 und 45 vorgesehen, in welche in der in Fig. 2 gezeigten Weise jeweils ein Skistock 47 eingesteckt werden kann. Der Skistockteller 49 begrenzt dabei die Einstecktiefe. Weiterhin sind Bänder 51 und 53 vorgesehen, die wie in Fig. 2 gezeigt, zum Skistockgriff gespannt werden können, um ein Herausrutschen des Skistocks zu vermeiden. Auf diese Weise lassen sich die an den beiden Seiten des Schlittens eingesteckten Skitstöcke als Stangen zum Lenken und Handhaben des Schlittens benutzen. Die Skistockspitzen 55 können dabei durch ihren Eingriff in den Schnee als Bremsen und Lenkhilfen dienen.

Im hinteren Bereich des Schlittens ist zwischen der Unterlage 13 und den Aufblaswülsten 7 eine Reißverschlußtasche 55 von ausreichender Größe zur Aufnahme der Luftmatratze samt gleitfähiger Unterlage und flexiblen Führungskufen vorgesehen.

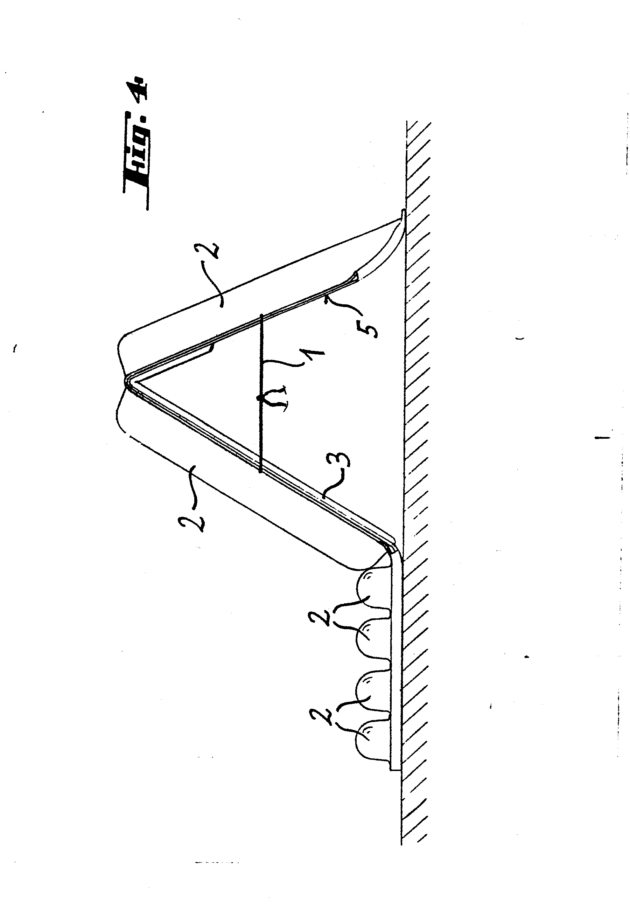

Fig. 3 veranschaulicht die Reißverschlußtasche 55 mit dem darin untergebrachten Rettungs- und Sportschlitten.

Mittels eines Gurtes 57 kann die Tasche nach Art einer Skiläufer-Gurttasche getragen werden.

Zur Sicherung einer auf dem Schlitten ruhenden Person dienen Sicherungsbänder 59, 61, 63 und 65. Wenn eine Person auf dem Schlitten ruht, können die in der oben erläuterten Weise nach vorne umgeschlagenen hinteren Aufblaswülste zugleich als erhöhtes Kopfkissen für die Person dienen.

In der in Fig. 4 veranschaulichten Weise kann der vordere Teil der Luftmatratze durch Knickung um die Knicklinie 11 nach Art einer Rückenlehne aufgestellt werden, wobei die quer verlaufenden Aufblaswülste 7 als Sitzfläche dienen. Die Sicherungsbänder können dabei auf beiden Seiten wie angedeutet miteinander verbunden werden, um die Rückenlehne in der aufgestellten Lage zu halten.

Hinsichtlich der Ausgestaltung der Reißverschlußtasche ist vorgesehen, daß diese aus zwei im wesentlichen rechteckigen Taschenteilen besteht, von denen der eine Taschenteil entlang drei Umfangsseiten mit der Unterlage 13 vernäht ist, wobei der Reißverschluß sich längs der Hinterkante des Schlittens erstreckt.

Die Bänder 33, 35 erstrecken sich zur richtigen Befestigung ein Stück zwischen Unterlage 13 und Aufblaswülsten und sind mit der Unterlage vernäht. Hinsichtlich der praktischen Ausgestaltung und Materialauswahl bestehen je nach Verwendungszweck als leichter Rettungsschlitten zur Mitführung bei größeren Touren oder als Rettungsschlitten für häufigeren Einsatz verschiedene Ausgestaltungsmöglichkeiten.

PATENTANSPRÜCHE:

1. Rettungs- und Sportschlitten für Wintersportler mit einer als Transportfläche aufblasbaren Luftmatratze, an deren beiden Längsseiten Skier anbringbar sind und an deren vorderem Ende Stangen zum Lenken und Handhaben des Schlittens vorgesehen sind, dadurch gekennzeichnet, daß an der Luftmatratze (1) eine Tasche (55) angebracht ist, in welcher die unaufgeblasene Luftmatratze unterbringbar ist und die nach Art einer Skiläufergurt-Tasche ausgestaltet ist, wobei am vorderen Ende des Schlittens Einstecksen (41-45) für die zum Lenken und Handhaben dienenden Skistöcke und Bänder (51, 53) vorgesehen sind, mit welchen die Skistöcke (47) in der in die Einstecksen eingesteckten Lage sicherbar sind.

2. Schlitten nach Anspruch 1, dadurch gekennzeichnet, daß unterhalb der Aufblaswülste (3, 5 und 7) der Luftmatratze eine durchgehende, gleitfähige Unterlage (13) vorgesehen ist und daß die Tasche (55) in dem Zwischenraum zwischen gleitfähiger Unterlage und Luftmatratzenwülsten angeordnet ist.

3.　　　Schlitten nach Anspruch 1 oder 2, dadurch gekennzeichnet, daß die Tasche eine Reißverschlußtasche mit zwei im wesentlichen rechteckigen Taschenteilen ist, von denen der eine Taschenteil entlang drei Umfangsseiten mit der Unterlage vernäht ist, wobei der Reißverschluß sich längs der Hinterkante des Schlittens erstreckt.

4.　　　Schlitten nach einem oder mehreren der voranstehenden Ansprüche, dadurch gekennzeichnet, daß die Unterlage in ihren seitlichen Bereichen am vorderen und hinteren Ende Einstecktaschen (23-29) für die Skispitzen und Skienden aufweist, daß sich über den Hauptteil der Skilänge Aufblaswülste (3, 5) in Längsrichtung erstrecken, welche die zum Anbringen der Skier dienenden Seitenteile der Unterlage (13) freilassen, und daß im hinteren Teil des Schlittens in paralleler Lage zueinander quer mehrere Aufblaswülste (7) angeordnet sind, welche sich über die gesamte Breite der Unterlage und auch über die hinteren Einstecktaschen für die Skienden erstrecken, und daß am rückwärtigen Ende des Schlittens an den beiden Seiten Bänder (33, 35) vorgesehen sind, die an den Skibindungen (37, 39) befestigbar sind.

5.　　　Schlitten nach Anspruch 4, dadurch gekennzeichnet, daß wenigstens ein Teil der im rückwärtigen Teil des Schlittens in Querlage vorgesehenen Aufblaswülste (7) zur Anpassung an verschiedene Skilängenauf die Oberseite der Skienden umschlagbar ist, wobei die Sicherung der Querwülste in dieser Lage durch die Bänder (33, 35) erfolgt.

6.　　　Schlitten nach Anspruch 4 oder 5, dadurch gekennzeichnet, daß die Bänder (33, 35) sich ein Stück zwischen Unterlage und Aufblaswülsten erstrecken und mit der Unterlage vernäht sind.

7. Schlitten nach einem oder mehreren der voranstehenden Ansprüche, dadurch gekennzeichnet, daß die zu mehreren vorgesehenen längs verlaufenden Aufblaswülste (3, 5) und quer verlaufenden Aufblaswülste (7) jeweils einzeln aufblasbar sind.

8. Schlitten nach Anspruch 7, dadurch gekennzeichnet, daß jeweils vier Wülste (3, 5) in Längsrichtung nebeneinander verlaufen und vier Wülste (7) in Querrichtung verlaufen.

9. Schlitten nach einem oder mehreren der voranstehenden Ansprüche, dadurch gekennzeichnet, daß im Bereich der äußeren Aufblaswülste an jeweils zwei Stellen Sicherheitsbänder (59, 61, 63, 65), mittels deren eine auf dem Schlitten ruhende Person oder Last sicherbar ist.

10. Schlitten nach Anspruch 9, dadurch gekennzeichnet, daß die in Längsrichtung verlaufenden Wülste etwa in der Mitte zwischen den Sicherheitsbändern (59, 61, 63, 65) um eine quer verlaufende Linie (11) knickbar und durch Verbinden zweier auf der gleichen Seite angeordneter Sicherheitsbänder (59, 61, bzw. 63, 65) als Rückenlehne eines Sitzes aufstellbar sind, wenn die Skier aus den Taschen entfernt sind, wobei die Querwülste (7) als Sitzfläche dienen.

11. Schlitten nach irgendeinem der voranstehenden Ansprüche, dadurch gekennzeichnet, daß an der Unterlage im Bereich der beiden äußeren längs verlaufenden Wülste jeweils eine Führungskufe (7) aus flexiblem Material befestigt ist.

**Fig. 1**

0151484

Fig. 3

Fig. 2

0151484

Fig. 4